(19) Europäisches Patentamt
European Patent Office
Office européen des brevets

(11) EP 4 718 555 A1

(12) EUROPEAN PATENT APPLICATION

(43) Date of publication:
**01.04.2026 Bulletin 2026/14**

(21) Application number: **25204446.6**

(22) Date of filing: **24.09.2025**

(51) International Patent Classification (IPC):
***H01M 10/052*** $^{(2010.01)}$ ***H01M 10/056*** $^{(2010.01)}$

(52) Cooperative Patent Classification (CPC):
**H01M 10/056; H01M 10/052**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.09.2024 KR 20240130058**

(71) Applicants:
- **SK On Co., Ltd.
Seoul 03161 (KR)**
- **Korea Research Institute of Chemical Technology
Daejeon 34114 (KR)**

(72) Inventors:
- **PARK, Myung Soo
34124 Daejeon (KR)**
- **RYU, Hye Min
34124 Daejeon (KR)**
- **LEE, Han Sol
34124 Daejeon (KR)**
- **KANG, Yong Ku
34114 Daejeon (KR)**
- **SUK, Jung Don
34114 Daejeon (KR)**
- **KIM, Se Hee
34114 Daejeon (KR)**
- **AN, Eui Gyeong
34114 Daejeon (KR)**
- **CHOI, Seung Ju
34114 Daejeon (KR)**
- **NGUYEN, Manh Tien
34114 Daejeon (KR)**

(74) Representative: **Prüfer & Partner mbB
Patentanwälte · Rechtsanwälte
Sohnckestraße 12
81479 München (DE)**

# (54) COMPOSITION FOR FORMING SOLID ELECTROLYTE, SOLID ELECTROLYTE AND LITHIUM SECONDARY BATTERY

(57) A composition for forming a solid electrolyte according to embodiments of the present disclosure includes: a liquid electrolyte including a solvent containing a nitrile compound having an ether group and a lithium salt; inorganic electrolyte particles; and a monomer having a polymerizable functional group. A solid electrolyte according to embodiments of the present disclosure includes a nitrile compound having an ether group, a lithium salt, inorganic electrolyte particles, and a polymer.

FIG. 1

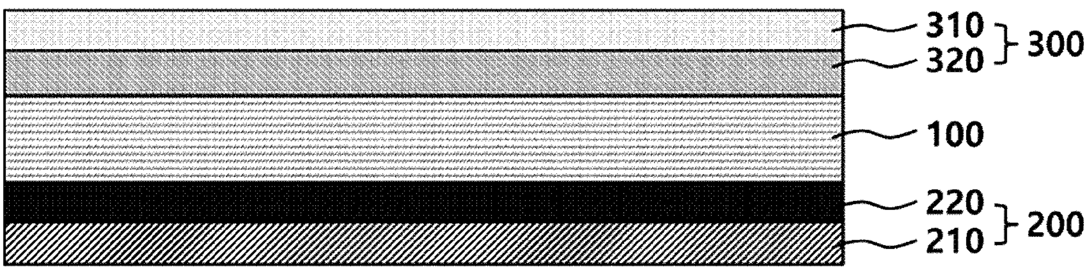

## Description

BACKGROUND

1. Field of the Invention

The present disclosure relates to a composition for forming a solid electrolyte, a solid electrolyte, and a lithium secondary battery.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickel-cadmium battery, and a nickel-hydrogen battery. Among these, lithium secondary batteries are actively developed and applied due to their high operating voltage, high energy density per unit weight, and advantages in charging speed and weight reduction.

Since commercially available lithium secondary batteries mainly use liquid electrolytes, there are safety issues such as leakage, ignition, and explosion due to sudden environmental changes, including temperature fluctuations, external impacts and the like. To address these problems, research has been conducted to solidify the electrolyte, thereby enhancing stability and increasing energy density.

All-solid-state batteries may include solid-state electrolytes such as gel polymers, oxides, sulfides, or composite polymers as the electrolyte. Accordingly, stability against ignition and explosion caused by external impacts or external environmental fluctuations may be enhanced.

SUMMARY

An object of the present disclosure is to provide a composition for forming a solid electrolyte that achieves a solid electrolyte having improved electrochemical properties.

Another object of the present disclosure is to provide a solid electrolyte having improved electrochemical properties.

Still another object of the present disclosure is to provide a lithium secondary battery including the solid electrolyte.

A composition for forming a solid electrolyte according to the present disclosure includes: a liquid electrolyte including a solvent containing a nitrile compound having an ether group and a lithium salt; inorganic electrolyte particles; and a monomer having a polymerizable functional group.

According to some embodiments, the nitrile compound may include one or two ether groups and one or two nitrile groups.

According to some embodiments, the nitrile compound may include an alkoxy group having 1 to 5 carbon atoms.

According to some embodiments, the nitrile compound may include at least one selected from the group consisting of methoxypropionitrile, methoxybutyronitrile, and ethoxypropionitrile.

According to some embodiments, the inorganic electrolyte particles may include an oxide-based inorganic electrolyte.

According to some embodiments, the oxide-based inorganic electrolyte may include at least one selected from the group consisting of a garnet compound, a NASICON compound, and a perovskite compound.

According to some embodiments, the oxide-based inorganic electrolyte may include at least one selected from the group consisting of an LLTO compound, an LLZO compound, a LATP compound, and a LAGP compound.

According to some embodiments, the content of the inorganic electrolyte may be 1 to 30 parts by weight, based on 100 parts by weight of the total weight of the liquid electrolyte and the monomer.

According to some embodiments, the monomer having a polymerizable functional group may include at least one selected from the group consisting of bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylic acid, trimethylolpropane trimethacrylate, and pentaerythritol tetraacrylate.

According to some embodiments, the content of the monomer may be 10 to 30 parts by weight, based on 100 parts by weight of the total weight of the liquid electrolyte and the monomer.

According to some embodiments, the liquid electrolyte may further include at least one additive selected from the

group consisting of unsaturated cyclic carbonate compounds, fluorine-substituted cyclic carbonate compounds, sultone compounds, cyclic sulfate compounds, fluorine-substituted phosphate compounds, and oxalato-phosphate compounds.

A solid electrolyte according to the present disclosure includes: a nitrile compound having an ether group; a lithium salt; inorganic electrolyte particles; and a polymer.

According to some embodiments, the nitrile compound may include one or two ether groups and one or two nitrile groups.

According to some embodiments, the nitrile compound may include an alkoxy group having 1 to 5 carbon atoms.

According to some embodiments, the nitrile compound may include at least one selected from the group consisting of methoxypropionitrile, methoxybutyronitrile, and ethoxypropionitrile.

According to some embodiments, the inorganic electrolyte particles may include an oxide-based inorganic electrolyte.

According to some embodiments, the oxide-based inorganic electrolyte may include at least one selected from the group consisting of a garnet compound, a NASICON compound, and a perovskite compound.

According to some embodiments, the oxide-based inorganic electrolyte may include at least one selected from the group consisting of an LLTO compound, an LLZO compound, a LATP compound, and a LAGP compound.

According to some embodiments, the solid electrolyte may further include at least one additive selected from the group consisting of unsaturated cyclic carbonate compounds, fluorine-substituted cyclic carbonate compounds, sultone compounds, cyclic sulfate compounds, fluorine-substituted phosphate compounds, and oxalato-phosphate compounds.

A lithium secondary battery according to the present disclosure includes: a cathode; an anode disposed opposite to the cathode; and the solid electrolyte interposed between the cathode and the anode.

A solid electrolyte having high ionic conductivity may be achieved from the composition for forming a solid electrolyte according to some embodiments of the present disclosure. Accordingly, the charge/discharge rate of the battery may be improved.

Due to the improved stability of the crystal structure of the inorganic electrolyte particles, the solid electrolyte according to some embodiments of the present disclosure may have improved electrochemical stability.

A lithium secondary battery according to some embodiments of the present disclosure may exhibit improved cycle life characteristics.

## BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a schematic cross-sectional view of a secondary battery according to some embodiments;
FIG. 2 is a graph illustrating the ionic conductivity of the solid electrolyte of Comparative Example 1 and Examples according to the content of inorganic electrolyte particles at different temperatures; and
FIG. 3 is a graph illustrating the change in discharge capacity of the lithium secondary batteries of Example 2 and Comparative Examples 1 and 2 according to cycle number and C-rate.

## DETAILED DESCRIPTION

A composition for forming a solid electrolyte according to the present disclosure includes: a liquid electrolyte including a solvent containing a nitrile compound and a lithium salt; inorganic electrolyte particles; and a monomer having a polymerizable functional group. In addition, a solid electrolyte according to the present disclosure is formed from the composition for forming a solid electrolyte, and a lithium secondary battery according to the present disclosure includes the solid electrolyte.

Hereinafter, embodiments of the present disclosure will be described in detail. However, these are merely illustrative and the present disclosure is not limited to the specific embodiments described as examples.

As used herein, the term "solid electrolyte" may be used as a concept in contrast to a liquid electrolyte. For example, the solid electrolyte may include a quasi-solid electrolyte, a gel polymer electrolyte, or a semi-solid electrolyte.

As used herein, the term "composition for forming a solid electrolyte" may include a composition for forming a quasi-solid electrolyte, a composition for forming a gel polymer electrolyte, or a composition for forming a semi-solid electrolyte.

According to some embodiments, the composition for forming a solid electrolyte (hereinafter, also abbreviated as "composition") includes a liquid electrolyte, inorganic electrolyte particles, and a monomer.

The liquid electrolyte includes a solvent and a lithium salt. The liquid electrolyte may prevent the hardness of the solid electrolyte from becoming excessively high and may serve as a medium through which lithium ions are transported.

The solvent includes a nitrile compound having an ether group. The ether group may have low reactivity with an

inorganic electrolyte of the inorganic electrolyte particles, such as an oxide-based electrolyte, thereby suppressing side reactions. In addition, the ether group may prevent the collapse or change of the crystal structure of the inorganic electrolyte particles due to side reactions, thereby improving the cycle life characteristics of the battery.

Further, the nitrile group of the nitrile compound, as a highly polar functional group, may reduce the volatility of the solvent and improve the ionic conductivity of the solid electrolyte.

The nitrile compound may include at least one ether group and at least one nitrile group. For example, the nitrile compound may include one or two ether groups and one or two nitrile groups. If the nitrile compound includes two ether groups, the ether groups may be linked by an alkylene group.

According to some embodiments, the nitrile compound may include an alkoxy group having 1 to 5 carbon atoms. For example, the nitrile compound may include a methoxy group or an ethoxy group.

For example, the nitrile compound may be represented by Formula 1 below.

[Formula 1]

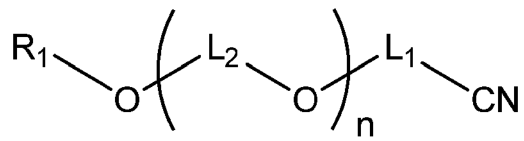

In Formula 1, $L_1$ and $L_2$ may each be a substituted or unsubstituted alkylene group having 1 to 3 carbon atoms, $R_1$ may be a substituted or unsubstituted alkyl group having 1 to 3 carbon atoms, and n may be 0 or an integer from 1 to 2.

As used herein, "substituted" means that any hydrogen is replaced by a substituent. Non-limiting examples of such substituents may include functional groups such as halogen, hydroxyl, carboxyl, amine, amide, cyano, thiol, and sulfonic acid groups.

For example, in Formula 1, $L_1$ may be a methylene, ethylene, or propylene group.

For example, in Formula 1, $L_2$ may be a methylene or ethylene group.

For example, in Formula 1, $R_1$ may be a methyl or ethyl group.

According to some embodiments, the nitrile compound may include at least one selected from the group consisting of methoxypropionitrile, methoxybutyronitrile, and ethoxypropionitrile.

According to some embodiments, the nitrile compound may have a Hansen solubility parameter ($\delta_T$) of 17.7 $MPa^{0.5}$ to 26.1 $MPa^{0.5}$.

The Hansen solubility parameter is a parameter for the solubility of a specific substance, which is determined by considering the dispersion force, dipole-dipole interaction, and hydrogen bonding force of the specific substance, and may be represented by Equation 1 below.

[Equation 1]

$$\delta_T = \sqrt{\delta_d^2 + \delta_p^2 + \delta_h^2}$$

In Equation 1, $\delta_T$ represents the Hansen solubility parameter ($MPa^{0.5}$), $\delta_d$ represents the solubility parameter ($MPa^{0.5}$) due to dispersion force, $\delta_p$ represents the solubility parameter ($MPa^{0.5}$) due to dipole-dipole interaction, and $\delta_h$ represents the solubility parameter ($MPa^{0.5}$) due to hydrogen bonding.

Within the above range, the interaction force between nitrile compound molecules may be appropriately maintained. Accordingly, the volatility of the solvent may be decreased, electrolyte loss in the battery may be reduced, and the cycle life characteristics of the battery may be improved.

In Equation 1, $\delta_d$ may range from 15.4 $MPa^{0.5}$ to 18.2 $MPa^{0.5}$, or from 16 $MPa^{0.5}$ to 17 $MPa^{0.5}$. $\delta_p$ may range from 6.3 $MPa^{0.5}$ to 17 $MPa^{0.5}$, or from 10 $MPa^{0.5}$ to 15 $MPa^{0.5}$. $\delta_h$ may range from 4.0 $MPa^{0.5}$ to 7.9 $Mpa^{0.5}$, from 6.0 $MPa^{0.5}$ to 7.9 $MPa^{0.5}$, or from 6.5 $MPa^{0.5}$ to 7.8 $Mpa^{0.5}$.

The lithium salt may include one or more lithium salt compounds. For example, the lithium salt may be represented as $Li^+X^-$, and non-limiting examples of an anion (X-) of the lithium salt may include $F^-$, $Cl^-$, $Br^-$, $I^-$, $NO_3^-$, $N(CN)_2^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, $BF_4^-$, $B(C_2O_4)_2^-$, $BF_2(C_2O_4)^-$, $B(C_3H_2O_4)_2^-$, $BF_2(C_3H_2O_4)^-$, $B(C_3HO_4F)_2^-$, $B(C_3F_2O_4)_2^-$, etc. The anions may be used alone or in combination of two or more thereof as lithium salts.

In one embodiment, the concentration of the lithium salt in the liquid electrolyte may be 0.01 M to 2 M or 0.5 M to 1.5 M. Within the above range, the transport of lithium ions and/or electrons may be facilitated during charging and discharging of the lithium secondary battery, thereby enabling a high-capacity battery to be realized.

According to some embodiments, the liquid electrolyte may further include at least one additive selected from the group consisting of unsaturated cyclic carbonate compounds, fluorine-substituted cyclic carbonate compounds, sultone compounds, cyclic sulfate compounds, fluorine-substituted phosphate compounds, and oxalato-phosphate compounds.

The unsaturated cyclic carbonate compounds may include vinyl ethylene carbonate (VEC), vinylene carbonate (VC) or the like.

The fluorine-substituted cyclic carbonate compounds may include fluoroethylene carbonate (FEC).

The sultone compounds may include 1,3-propane sultone, 1,3-propene sultone, 1,4-butane sultone or the like.

The cyclic sulfate compounds may include 1,2-ethylene sulfate, 1,2-propylene sulfate or the like.

The fluorine-substituted phosphate compound may include lithium difluorophosphate ($LiPO_2F_2$) or the like.

The oxalato-phosphate compound may include lithium difluorobis(oxalato)phosphate or the like.

These compounds may be used alone or in combination of two or more thereof.

The content of the additive may be about 0.01% by weight ("wt%") to 5 wt% based on the total weight of the liquid electrolyte.

According to some embodiments, the composition includes inorganic electrolyte particles. The inorganic electrolyte particles may further improve the ionic conductivity of the solid electrolyte and support the shape of the solid electrolyte.

According to some embodiments, the inorganic electrolyte particles may include an oxide-based inorganic electrolyte.

For example, the oxide-based inorganic electrolyte may include a garnet compound, a NASICON compound, a perovskite compound or the like. These may be used alone or in combination of two or more thereof.

The garnet compound may be a compound having a garnet crystal structure or a garnet-like crystal structure, and may include, for example, an LLZO compound.

The LLZO compound may be an oxide including lithium, lanthanum, and zirconium. The LLZO compound may further include Al, Ga, In, Sc, Ba, Nb or the like. For example, the LLZO compound may include $Li_7La_3Zr_2O_{12}$ or the like.

The NASICON compound may be a compound having a NASICON crystal structure or a NASICON-like crystal structure, and may include, for example, a LATP compound, a LAGP compound or the like.

The LATP compound may be a phosphate including lithium, aluminum, and titanium. For example, the LATP compound may include $Li_{1.3}Al_{0.3}Ti_{1.7}(PO_4)_3$ or the like.

The LAGP compound may be a phosphate including lithium, aluminum, and germanium. For example, the LAGP compound may include $Li_{1.5}Al_{0.5}Ge_{1.5}(PO_4)_3$ or the like.

The perovskite compound may be a compound having a perovskite crystal structure or a perovskite-like crystal structure, and may include an LLTO compound.

The LLTO compound may be an oxide including lithium, lanthanum, and titanium. For example, the LLTO compound may include $Li_{0.31}La_{0.56}TiO_3$.

The inorganic electrolyte particles may have a median particle diameter (D50) of about 100 nm to 5 $\mu$m. In some embodiments, the inorganic electrolyte particles may have a median particle diameter (D50) of 150 nm to 3 $\mu$m or 200 nm to 1 $\mu$m.

Within the above range, the formability of the composition may be ensured while allowing smooth transport of lithium ions. The term "median particle diameter (D50)" may be defined as the particle diameter at which the cumulative volume percentage in the particle size distribution, obtained based on particle volume, reaches 50%.

According to some embodiments, the content of the inorganic electrolyte may be 1 to 30 parts by weight, based on 100 parts by weight of the total weight of the liquid electrolyte and the monomer. In some embodiments, the content of the inorganic electrolyte may be 1 to 10 parts by weight, or 2 to 5 parts by weight, based on 100 parts by weight of the total weight of the liquid electrolyte and the monomer.

Within the above range, the ionic conductivity of the solid electrolyte may be further improved, the charge/-discharge rate of the battery may be increased, and the cycle life characteristics of the battery may be enhanced.

According to some embodiments, the composition may include a monomer having a polymerizable functional group. The monomer may form a polymer through a reaction between polymerizable functional groups when energy is applied to the composition, and the polymer may function as a support and a matrix for the solid electrolyte.

According to some embodiments, the polymerizable functional group may include a (meth)acrylate group.

According to some embodiments, the monomer having a polymerizable functional group may include bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylic acid, trimethylolpropane trimethacrylate, pentaerythritol tetraacrylate or the like.

According to some embodiments, the content of the monomer may be 5 to 30 parts by weight, or 10 to 30 parts by

weight, based on 100 parts by weight of the total weight of the liquid electrolyte and the monomer. According to some embodiments, the content of the monomer may be 5 to 25 parts by weight, or 10 to 25 parts by weight, based on 100 parts by weight of the total weight of the liquid electrolyte and the monomer.

Within the above range, the viscosity of the composition and the hardness of the solid electrolyte may not increase excessively, and the shape of the solid electrolyte may be maintained.

According to some embodiments, the composition may may further includes a thermal initiator or a photoinitiator. The thermal initiator or the photoinitiator may initiate a polymerization reaction of the monomer, thereby forming a polymer.

For example, the thermal initiator may include a peroxide compound, a persulfate-based initiator, an azo-based initiator, hydrogen peroxide, ascorbic acid or the like.

For example, the thermal initiator may include: peroxide-based initiators such as benzoyl peroxide, di-tert-butyl peroxide, di-tert-amyl peroxide, $\alpha$-cumyl peroxyneodecanoate, $\alpha$-cumyl peroxyneopentanoate, t-amyl peroxyneodecanoate, di-(2-ethylhexyl) peroxydicarbonate, t-amyl peroxypivalate, t-butyl peroxypivalate, 2,5-dimethyl-2,5-bis(2-ethylhexanoylperoxy)hexane, dibenzoyl peroxide, t-amyl peroxy-2-ethylhexanoate, t-butyl peroxy-2-ethylhexanoate, 1,1-di-(t-amylperoxy)cyclohexane, 1,1-di-(t-butylperoxy)-3,3,5-trimethylcyclohexane, 1,1-di-(t-butylperoxy)cyclohexane, t-butyl peroxyacetate, t-amyl peroxybenzoate, ethyl 3,3-di-(t-amylperoxy)butyrate, t-butyl peroxybenzoate, ethyl 3,3-di-(t-butylperoxy)butyrate, or dicumyl peroxide; and azo-based initiators such as 1,1'-azobis(cyclohexanecarbonitrile), 2,2'-azobis(2-methylpropionamidine) dihydrochloride, or 4,4'-azobis(4-cyanovaleric acid). These may be used alone or in combination of two or more thereof.

For example, the photoinitiator may include an acetophenone-based initiator, a benzophenone-based initiator, a thioxanthone-based initiator, a benzoin-based initiator, a triazine-based initiator or the like.

The content of the thermal initiator or the photoinitiator may be 0.1 to 3 parts by weight, based on 100 parts by weight of the total weight of the liquid electrolyte and the monomer.

The solid electrolyte according to the present disclosure includes a nitrile compound having an ether group, a lithium salt, inorganic electrolyte particles, and a polymer. The polymer may be a homopolymer or copolymer of the above-described monomers.

The nitrile compound, lithium salt, and inorganic electrolyte particles may be the same as those described above.

The polymer may be formed by a polymerization reaction between polymerizable functional groups of a plurality of monomers, and the polymer may include repeating units derived from the monomers.

According to some embodiments, the polymer may include repeating units derived from bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylic acid, trimethylolpropane trimethacrylate, pentaerythritol tetraacrylate or the like.

The solid electrolyte may be formed from the composition for forming a solid electrolyte. The solid electrolyte may be formed by thermal polymerization or photopolymerization of the composition for forming a solid electrolyte, and the solid electrolyte may include the polymer, which is formed by polymerizing the monomer.

For example, the composition for forming a solid electrolyte may be applied onto a porous film, and the monomer may be polymerized by heating (thermal polymerization) or light irradiation (photopolymerization). Alternatively, the composition for forming a solid electrolyte may be introduced into a mold having a predetermined shape, and the monomer may be polymerized by heating (thermal polymerization) or light irradiation (photopolymerization).

Therefore, the polymerizable functional groups may undergo a polymerization reaction to form a polymer. The polymer may have a three-dimensional network structure with pores, and the liquid electrolyte and the inorganic electrolyte particles may be disposed within the pores.

For example, the porous film may include a plurality of interconnected pores, and the composition for forming a solid electrolyte may be impregnated into the pores. The monomer of the composition for forming a solid electrolyte may be polymerized through thermal polymerization to form a polymer. The polymer may form an interpenetrating polymer network (IPN) or a semi-interpenetrating polymer network (semi-IPN) with the pores of the porous film. The liquid electrolyte and the inorganic electrolyte particles may be disposed in the pores of the formed polymer network.

When the composition for forming a solid electrolyte is thermally polymerized, the solid electrolyte may be formed by allowing the composition to stand at a temperature of about 50°C to 150°C for about 20 to 60 minutes.

According to some embodiments, the solid electrolyte may have a thickness of about 10 $\mu$m to 200 $\mu$m. In some embodiments, the solid electrolyte may have a thickness of about 15 $\mu$m to 150 $\mu$m.

The lithium secondary battery according to the present disclosure includes a cathode, an anode disposed opposite to the cathode, and the solid electrolyte interposed between the cathode and the anode.

FIG. 1 is a schematic cross-sectional view of a secondary battery according to some embodiments.

Referring to FIG. 1, the secondary battery includes a cathode 300, an anode 200 disposed opposite to the cathode 300, and an electrolyte layer 100 disposed between the cathode 300 and the anode 200, and including the solid electrolyte.

The cathode 300 may include a cathode current collector 310 and a cathode active material layer 320 disposed

on at least one surface of the cathode current collector 310.

The cathode current collector 310 may include stainless steel, nickel, aluminum, titanium, or an alloy thereof. The cathode current collector 310 may also include aluminum or stainless steel having a surface treated with carbon, nickel, titanium, or silver. The thickness of the cathode current collector may be, for example, 10 μm to 50 μm.

The cathode active material layer 320 may include a cathode active material. The cathode active material may include a compound capable of reversibly intercalating and deintercalating lithium ions.

According to some embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 2 below.

[Formula 2] $Li_xNi_aM_yO_{2+z}$

In Formula 2, x, a, b and z may satisfy $0.9 \le x \le 1.2$, $0.6 \le a \le 0.99$, $0.01 \le b \le 0.4$, and $-0.5 \le z \le 0.1$. As described above, M may include Co, Mn and/or Al.

The chemical structure represented by Formula 2 indicates a bonding relationship between elements included in the layered structure or the crystal structure of the cathode active material, and does not exclude other additional elements. For example, M includes Co and/or Mn, and Co and/or Mn may be provided as main active elements of the cathode active material together with Ni. Here, it should be understood that Formula 2 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 2.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material together with Co or Mn, such as Al.

For example, the cathode active material or the lithium-nickel metal oxide may include a layered structure or a crystal structure represented by Formula 2-1 below.

[Formula 2-1] $Li_xNi_aM1_bM2_cO_{2+z}$

In Formula 2-1, M1 may include Co, Mn and/or Al. M2 may include the above-described auxiliary elements. In Formula 2-1, x, a, b, c and z may satisfy $0.9 \le x \le 1.2$, $0.6 \le a \le 0.99$, $0.01 \le b+c \le 0.4$, and $-0.5 \le z \le 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of lithium-nickel metal oxide particles, or may penetrate through the surface of the lithium-nickel metal oxide particles to be incorporated into the bonding structure represented by Formula 2 or Formula 2-1 above.

The cathode active material may include a nickel-cobalt-manganese (NCM)-based lithium oxide. In this case, an NCM-based lithium oxide having an increased content of nickel may be used.

Nickel (Ni) may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to some embodiments, by including Co, the cycle life stability and capacity retention characteristics may be improved through Mn while maintaining electrical conductivity.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate

(LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which have a chemical structure or a crystal structure represented by Formula 3 below.

[Formula 3] $p[Li_2MnO_3]\cdot(1-p)[Li_qJO_2]$

In Formula 3, p and q may satisfy $0<p<1$, and $0.9\leq q\leq 1.2$, and J may include at least one element selected from Mn, Ni, Co, Fe, Cr, V, Cu, Zn, Ti, Al, Mg and B.

For example, a cathode slurry may be prepared by mixing a solvent and the cathode active material. The cathode slurry may be coated on the cathode current collector 310, followed by drying and roll-pressing to prepare the cathode active material layer 320. The coating process may be performed using methods such as gravure coating, slot die coating, simultaneous multilayer die coating, imprinting, doctor blade coating, dip coating, bar coating or casting, etc., but is not limited thereto. The cathode active material layer may further include a binder and optionally may further include a conductive material, a thickener or the like.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran or the like.

The binder may include polyvinylidene fluoride (PVDF), poly(vinylidene fluoride-co-hexafluoropropylene), polyacrylonitrile, polymethyl methacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCFs), and carbon fibers, and/or metal-based conductive materials, including perovskite materials, such as tin, tin oxide, titanium oxide, $LaSrCoO_3$, and $LaSrMnO_3$, but is not limited thereto.

The cathode slurry may further include a thickener and/or a dispersant, as needed. In one embodiment, the cathode slurry may include a thickener such as carboxymethyl cellulose (CMC).

The anode 200 may include an anode current collector 210 and an anode active material layer 220 disposed on at least one surface of the anode current collector 210.

The anode current collector 210 may include, for example, a copper foil, a nickel foil, a stainless steel foil, a titanium foil, a nickel foam, a copper foam, a polymer substrate coated with a conductive metal and the like. The anode current collector 210 may have a thickness of, for example, 10 $\mu$m to 50 $\mu$m, but is not limited thereto.

The anode current collector 210 is not an essential component, and the anode 200 may include only the anode active material layer 220 without the anode current collector 210.

The anode active material layer 220 may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, $SiO_x$ ($0<x<2$), a metal-doped $SiO_x$ ($0<x<2$), a silicon-carbon composite, etc. The metal may include lithium and/or magnesium, and the metal-doped $SiO_x$ ($0<x<2$) may include a metal silicate.

For example, an anode slurry may be prepared by mixing the anode active material in a solvent. The anode slurry may be coated/deposited to the anode current collector, and then dried and roll-pressed to prepare the anode active material layer 220. The coating process may be performed using substantially the same method as the method of preparing the cathode active material layer 320. The anode active material layer 220 may further include a binder, and optionally may further include an electrolyte, a conductive material, a thickener, etc.

In some embodiments, the anode 200 may include the anode active material layer in the form of a lithium metal

formed through a deposition/coating process.

The solvent for the anode active material layer may include, for example, water, purified water, deionized water, distilled water, ethanol, isopropanol, methanol, acetone, n-propanol, t-butanol, etc.

The above-described materials that can be used when manufacturing the cathode as the binder, conductive material and thickener may also be used for the anode.

In some embodiments, a styrene-butadiene rubber-based binder, carboxymethyl cellulose, polyacrylic acid-based binder, poly(3,4-ethylenedioxythiophene (PEDOT)-based binder, and the like may be used as an anode binder.

In some embodiments, the electrolyte layer 100 may be interposed between the cathode 300 and the anode 200 within the electrode assembly. For example, an electrode cell may be defined by the cathode 300, the anode 200 and the electrolyte layer 100, and a plurality of the electrode cells may be stacked to form an electrode assembly. For example, the electrode assembly may be formed by winding, stacking, folding or the like.

For example, electrode tabs (cathode tabs and anode tabs) may protrude from the cathode current collector and the anode current collector, respectively, and may extend to one side of a case. The electrode tabs may be fused together with the one side of the case and connected to electrode leads (a cathode lead and an anode lead) that extend or are exposed to the outside of the case.

According to some embodiments, the electrode cell may be formed by interposing the solid electrolyte between the cathode 300 and the anode 200.

For example, a pouch-type case, a prismatic case, a cylindrical case, or a coin-type case, etc. may be used as the case.

Hereinafter, the embodiments of the present disclosure will be further described with reference to specific experimental examples. The examples and comparative examples included in the experimental examples are merely illustrative of the present disclosure and do not limit the scope of the appended claims. It will be apparent to those skilled in the art that various changes and modifications to the examples can be made within the scope and technical spirit of the present disclosure, and it is also understood that such changes and modifications fall within the scope of the appended claims.

## Example 1

(1) Preparation of solid electrolyte

A composition for forming a solid electrolyte was prepared by mixing 80 parts by weight of a liquid electrolyte including 0.9 M lithium bis(trifluoromethanesulfonyl)imide (LiTFSI) and 0.1 M lithium difluoro(oxalato)borate (LiDFOB) dissolved in methoxypropionitrile and 5 parts by weight of fluoroethylene carbonate, 20 parts by weight of bisphenol A ethoxylated diacrylate, 2 parts by weight of t-butyl peroxypivalate (t-BPP, Seki Arkema Co., Korea) as a thermal initiator, and 2 parts by weight of $Li_7La_3Zr_2O_{12}$ (LLZO) particles (D50=500 nm).

The composition for forming a solid electrolyte was thermally polymerized at 90°C for 30 minutes to form a solid electrolyte having a thickness of about 115 μm.

(2) Manufacture of lithium secondary battery

$LiNi_{0.8}Co_{0.1}Mn_{0.1}O_2$ as a cathode active material, polyvinylidene fluoride (PVDF, Kynar Flex® 2851, Arkema) as a binder, and Ketjen Black as a conductive material were put into N-methyl-2-pyrrolidone (NMP) as a solvent in a mixer (Thinky mixer) at a weight ratio of 96.5:1.5:2.0 and mixed by rotation and revolution for 30 minutes to prepare a cathode slurry. The cathode slurry was uniformly applied to an aluminum foil, vacuum-dried at about 120 °C, and roll-pressed to fabricate a cathode (loading amount: about 15 $mg/cm^2$, mixture density: about 2.5 $g/cm^3$).

In a glove box, a polyacrylonitrile-polyvinylidene fluoride (PAN-PVDF) nonwoven fabric support (porosity: about 72.5%) was laminated onto a lithium metal foil having a thickness of 300 μm (Honjo Metal). The composition for forming a solid electrolyte was applied to the nonwoven fabric support, and the cathode was then stacked to assemble the cell. The cell was aged for 7 hours or more and then thermally cured in an oven at about 90 °C for about 30 minutes to manufacture a battery.

## Example 2

A solid electrolyte and a battery were manufactured in the same manner as in Example 1, except that 3 parts by weight of $Li_7La_3Zr_2O_{12}$ particles were used.

## Example 3

A solid electrolyte and a battery were manufactured in the same manner as in Example 1, except that 5 parts by weight of $Li_7La_3Zr_2O_{12}$ particles were used.

## Example 4

A solid electrolyte and a battery were manufactured in the same manner as in Example 1, except that 10 parts by weight of $Li_7La_3Zr_2O_{12}$ particles were used.

## Example 5

A solid electrolyte and a battery were manufactured in the same manner as in Example 1, except that 30 parts by weight of $Li_7La_3Zr_2O_{12}$ particles were used.

## Comparative Example 1

A solid electrolyte and a battery were manufactured in the same manner as in Example 1, except that $Li_7La_3Zr_2O_{12}$ particles were not used.

## Comparative Example 2

A solid electrolyte and a battery were manufactured in the same manner as in Example 1, except that glutaronitrile was used instead of methoxypropionitrile.

## Experimental Example 1: Evaluation of ionic conductivity of solid electrolytes

Stainless steel was used as the electrode, and the solid electrolytes of the examples and comparative examples were placed between two SUS plates to manufacture a coin cell-type conductivity measurement cell. The internal resistance of the cell was measured using an electrochemical impedance analyzer (IM6, Zahner Elektrik). The impedance spectrum was measured at an open circuit potential with an amplitude of 20 mV in the frequency range of 1 Hz to 1 MHz, and the ionic conductivity was measured at 25°C, 45°C, and 60°C, respectively.

The measurement results are shown in Table 1. In Table 1 below, "-" indicates that the ionic conductivity could not be measured. FIG. 2 is a graph illustrating the ionic conductivity of the solid electrolyte of Comparative Example 1 and Examples according to the content of inorganic electrolyte particles at different temperatures.

[TABLE 1]

| Category | Ionic conductivity (mS/cm) | | |
|---|---|---|---|
| | 25°C | 45°C | 60°C |
| Example 1 | 1.58 | 2.57 | 3.09 |
| Example 2 | 2.20 | 2.93 | 3.52 |
| Example 3 | 1.76 | 2.88 | 3.19 |
| Example 4 | 1.76 | 1.81 | 1.96 |
| Example 5 | 1.54 | 1.74 | 1.80 |
| Comparative Example 1 | 1.52 | - | - |
| Comparative Example 2 | 0.96 | - | - |

Referring to Table 1, at 25°C, the polymer electrolytes of the examples in inorganic electrolyte particles exhibited higher ionic conductivity than that of Comparative Example 1, which did not include inorganic electrolyte particles, and Comparative Example 2, which did not include a solvent containing a nitrile compound having an ether group.

In addition, referring to FIG. 2, the solid electrolyte of Example 2 exhibited particularly enhanced ionic conductivity at 25°C, 45°C, and 60°C.

## Experimental Example 2: Evaluation of C-rate characteristics of the battery

The lithium secondary batteries of Example 2 and Comparative Examples 1 and 2 were subjected to five charge/discharge cycles at constant currents of 0.1 C, 0.2 C, 0.5 C, 1 C, or 2 C at 25°C within a voltage range of 4.2 V to 3.0 V, and the discharge capacities were measured. FIG. 3 is a graph illustrating the change in discharge capacity of the lithium secondary batteries of Example 2 and Comparative Examples 1 and 2 according to cycle number and C-rate.

Referring to FIG. 3, the initial capacity of the battery of Example 2 was 191.01 mAh/g, which was higher than that of the batteries of the comparative examples. In addition, the capacity of the battery of Example 2 was markedly enhanced at high rates of 0.5 C or higher.

The contents described above are merely examples of applying the principles of the present disclosure, and other configurations may be further included without departing from the scope of the present disclosure.

The invention relates also to the following numbered aspects:

Aspect 1. A composition for forming a solid electrolyte comprising:

a liquid electrolyte comprising a solvent including a nitrile compound having an ether group and a lithium salt;
inorganic electrolyte particles; and
a monomer having a polymerizable functional group.

Aspect 2. The composition for forming a solid electrolyte according to aspect 1, wherein the nitrile compound includes one or two ether groups and one or two nitrile groups.

Aspect 3. The composition for forming a solid electrolyte according to aspect 1 or aspect 2, wherein the nitrile compound includes an alkoxy group having 1 to 5 carbon atoms.

Aspect 4. The composition for forming a solid electrolyte according to any one of aspects 1 to 3, wherein the nitrile compound includes at least one selected from the group consisting of methoxypropionitrile, methoxybutyronitrile, and ethoxypropionitrile.

Aspect 5. The composition for forming a solid electrolyte according to any one of aspects 1 to 4, wherein the inorganic electrolyte particles comprise an oxide-based inorganic electrolyte.

Aspect 6. The composition for forming a solid electrolyte according to any one of aspects 1 to 5, wherein the content of the inorganic electrolyte particles is 1 to 30 parts by weight, based on 100 parts by weight of the total weight of the liquid electrolyte and the monomer.

Aspect 7. The composition for forming a solid electrolyte according to any one of aspects 1 to 6, wherein the monomer having a polymerizable functional group comprises at least one selected from the group consisting of bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylic acid, trimethylolpropane trimethacrylate, and pentaerythritol tetraacrylate.

Aspect 8. The composition for forming a solid electrolyte according to any one of aspects 1 to 7, wherein the content of the monomer is 10 to 30 parts by weight, based on 100 parts by weight of the total weight of the liquid electrolyte and the monomer.

Aspect 9. A solid electrolyte comprising:

a nitrile compound having an ether group;
a lithium salt;
inorganic electrolyte particles; and
a polymer.

Aspect 10. The solid electrolyte according to aspect 9, wherein the nitrile compound includes one or two ether groups and one or two nitrile groups.

Aspect 11. The solid electrolyte according to aspect 9 or aspect 10, wherein the nitrile compound includes an alkoxy group having 1 to 5 carbon atoms.

Aspect 12. The solid electrolyte according to any one of aspects 9 to 11, wherein the nitrile compound comprises at least one selected from the group consisting of methoxypropionitrile, methoxybutyronitrile, and ethoxypropionitrile.

Aspect 13. The solid electrolyte according to any one of aspects 9 to 12, wherein the inorganic electrolyte particles comprise an oxide-based inorganic electrolyte.

Aspect 14. The solid electrolyte according to any one of aspects 9 to 13, wherein the solid electrolyte further comprises at least one additive selected from the group consisting of unsaturated cyclic carbonate compounds, fluorine-substituted cyclic carbonate compounds, sultone compounds, cyclic sulfate compounds, fluorine-substituted phosphate compounds, and oxalato-phosphate compounds.

Aspect 15. A lithium secondary battery comprising:

a cathode;
an anode disposed opposite to the cathode; and
the solid electrolyte according to any one of aspects 9 to 14 interposed between the cathode and the anode.

[Description of Reference Numerals]

100: Electrolyte layer
200: Anode
210: Anode current collector
220: Anode active material layer
300: Cathode
310: Cathode current collector
320: Cathode active material layer

## Claims

1. A composition for forming a solid electrolyte comprising:

   a liquid electrolyte comprising a solvent including a nitrile compound having an ether group and a lithium salt;
   inorganic electrolyte particles; and
   a monomer having a polymerizable functional group.

2. The composition for forming a solid electrolyte according to claim 1, wherein the nitrile compound includes one or two ether groups and one or two nitrile groups.

3. The composition for forming a solid electrolyte according to claim 1 or claim 2, wherein the nitrile compound includes an alkoxy group having 1 to 5 carbon atoms.

4. The composition for forming a solid electrolyte according to any one of claims 1 to 3, wherein the nitrile compound includes at least one selected from the group consisting of methoxypropionitrile, methoxybutyronitrile, and ethoxypropionitrile.

5. The composition for forming a solid electrolyte according to any one of claims 1 to 4, wherein the inorganic electrolyte particles comprise an oxide-based inorganic electrolyte.

6. The composition for forming a solid electrolyte according to any one of claims 1 to 5, wherein the content of the inorganic electrolyte particles is 1 to 30 parts by weight, based on 100 parts by weight of the total weight of the liquid electrolyte and the monomer.

7. The composition for forming a solid electrolyte according to any one of claims 1 to 6, wherein the monomer having a polymerizable functional group comprises at least one selected from the group consisting of bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylic acid, trimethylolpropane trimethacrylate, and pentaerythritol tetraacrylate.

8. The composition for forming a solid electrolyte according to any one of claims 1 to 7, wherein the content of the monomer is 10 to 30 parts by weight, based on 100 parts by weight of the total weight of the liquid electrolyte and the monomer.

9. A solid electrolyte comprising:

   a nitrile compound having an ether group;
   a lithium salt;

inorganic electrolyte particles; and
a polymer.

**10.** The solid electrolyte according to claim 9, wherein the nitrile compound includes one or two ether groups and one or two nitrile groups.

**11.** The solid electrolyte according to claim 9 or claim 10, wherein the nitrile compound includes an alkoxy group having 1 to 5 carbon atoms.

**12.** The solid electrolyte according to any one of claims 9 to 11, wherein the nitrile compound comprises at least one selected from the group consisting of methoxypropionitrile, methoxybutyronitrile, and ethoxypropionitrile.

**13.** The solid electrolyte according to any one of claims 9 to 12, wherein the inorganic electrolyte particles comprise an oxide-based inorganic electrolyte.

**14.** The solid electrolyte according to any one of claims 9 to 13, wherein the solid electrolyte further comprises at least one additive selected from the group consisting of unsaturated cyclic carbonate compounds, fluorine-substituted cyclic carbonate compounds, sultone compounds, cyclic sulfate compounds, fluorine-substituted phosphate compounds, and oxalato-phosphate compounds.

**15.** A lithium secondary battery comprising:

a cathode;
an anode disposed opposite to the cathode; and
the solid electrolyte according to any one of claims 9 to 14 interposed between the cathode and the anode.

FIG. 1

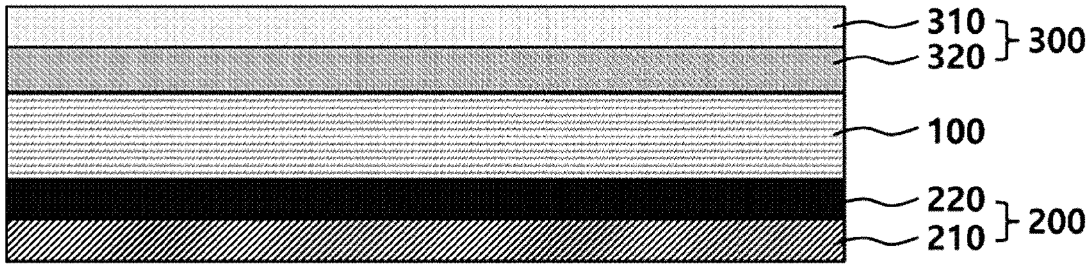
310
320
300
100
220
210
200

FIG. 2

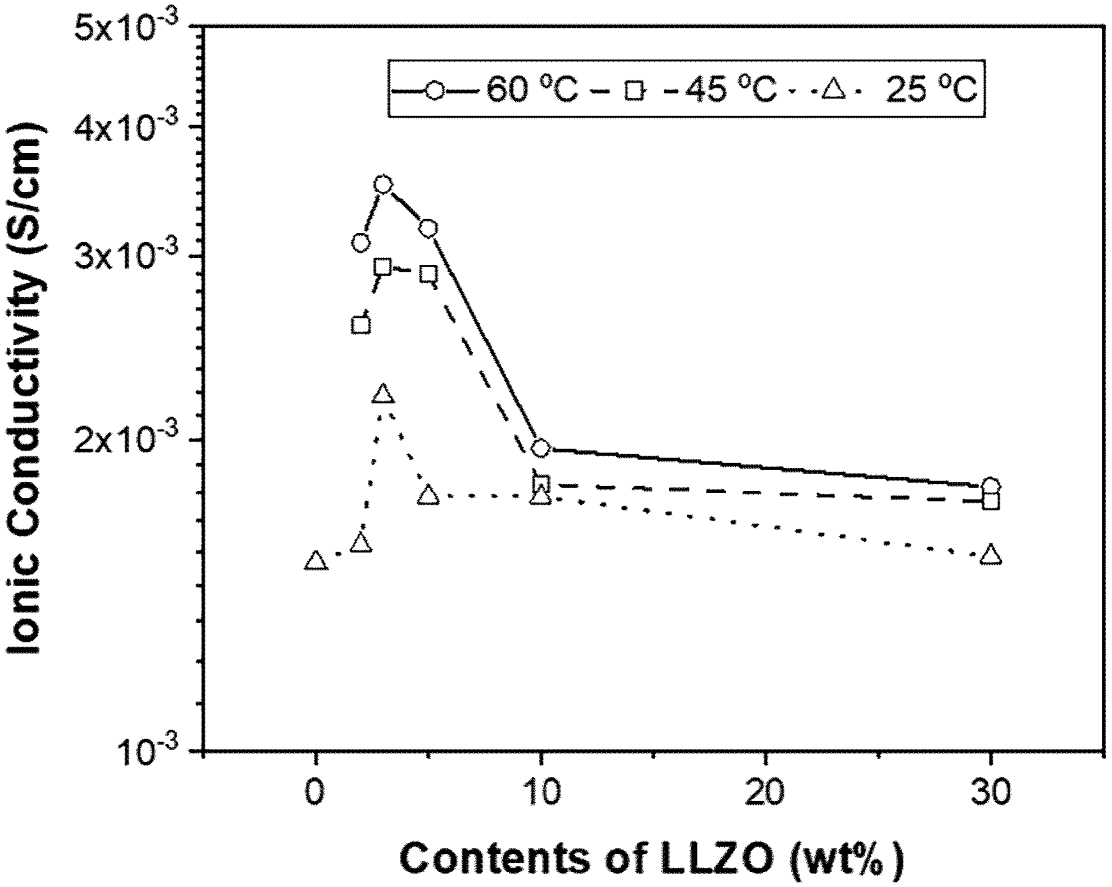
60 °C
45 °C
25 °C
Ionic Conductivity (S/cm)
5x10-3
4x10-3
3x10-3
2x10-3
10-3
0
10
20
30
Contents of LLZO (wt%)

FIG. 3

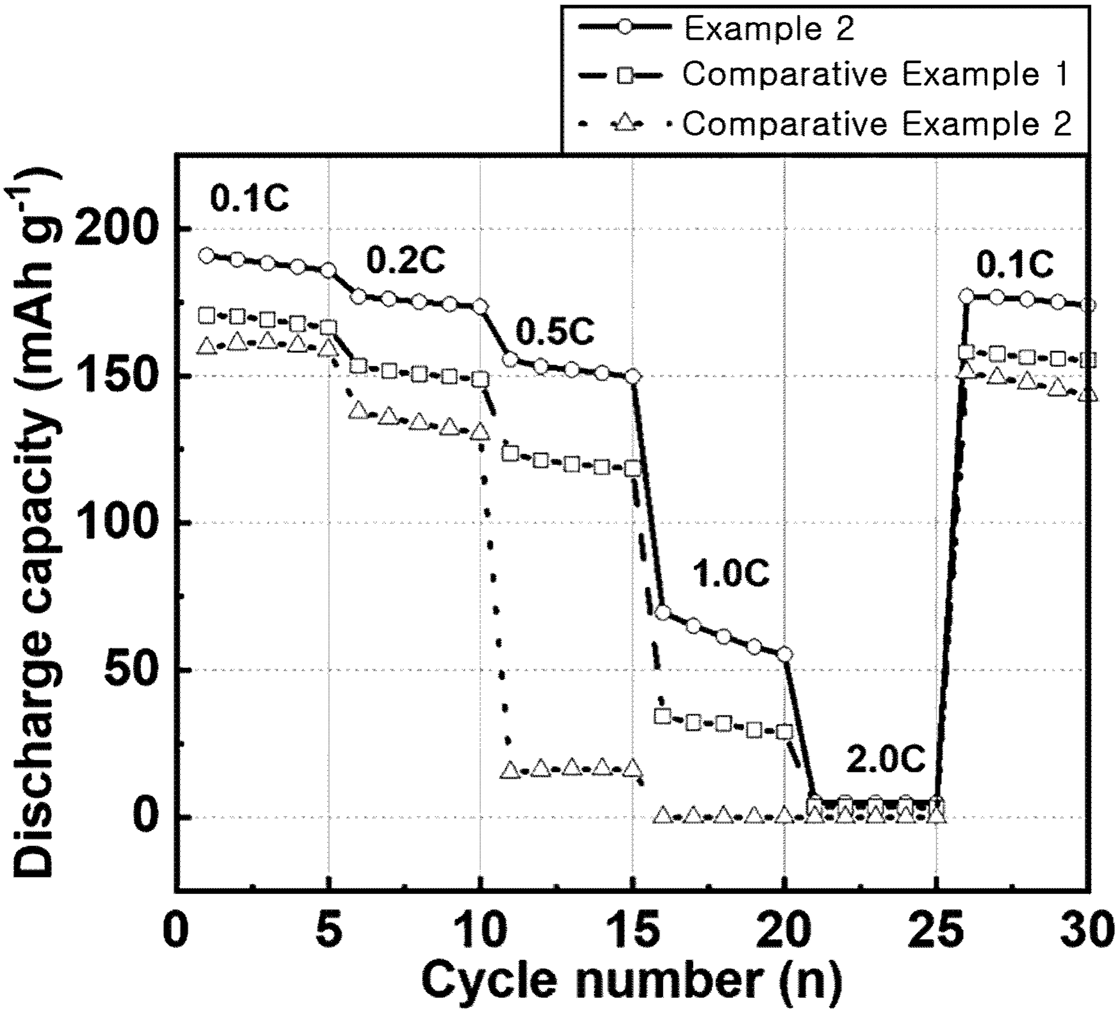
Example 2
Comparative Example 1
Comparative Example 2
0.1C
0.2C
0.5C
1.0C
2.0C
0.1C
Discharge capacity (mAh g$^{-1}$)
0
50
100
150
200
0
5
10
15
20
25
30
Cycle number (n)

Europäisches Patentamt
European Patent Office
Office européen des brevets

# EUROPEAN SEARCH REPORT

Application Number
EP 25 20 4446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 7 229854 B2 (MAXELL HOLDINGS LTD) 28 February 2023 (2023-02-28) * paragraphs [0029], [0058] - [0060], [0062], [0063] * * claim 1 * ----- | 1-15 | INV. H01M10/052 H01M10/056 |
| Y | KR 101 887 819 B1 (ULSAN NAT INST SCIENCE & TECH UNIST [KR]) 10 August 2018 (2018-08-10) * claims 1,3,7-9,11 * ----- | 1-15 | |
| A | KR 2018 0000195 A (ULSAN NAT INST SCIENCE & TECH UNIST [KR]) 2 January 2018 (2018-01-02) * claims 1,2,5-7,10 * ----- | 1-15 | |

TECHNICAL FIELDS SEARCHED (IPC)

H01M

The present search report has been drawn up for all claims

2

| Place of search | Date of completion of the search | Examiner |
|---|---|---|
| The Hague | 4 February 2026 | Reich, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 20 4446

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2026

| Patent document cited in search report | Publication date | Patent family member(s) | Publication date |
|---|---|---|---|
| JP 7229854 B2 | 28-02-2023 | JP 7229854 B2 | 28-02-2023 |
| | | JP 2020198232 A | 10-12-2020 |
| KR 101887819 B1 | 10-08-2018 | NONE | |
| KR 20180000195 A | 02-01-2018 | NONE | |

EPO FORM P0459

For more details about this annex : see Official Journal of the European Patent Office, No. 12/82